# EUROPEAN PATENT SPECIFICATION

(11) **EP 3 308 646 B1**
(45) Date of publication and mention of the grant of the patent: **07.10.2020**
(21) Application number: 16194036.6
(22) Date of filing: 14.10.2016
(51) Int. Cl.: A01N 43/90, A01N 25/10, A01P 1/00

(54) **PHOTOACTIVABLE BIOCIDE AND/OR BACTERICIDAL MATERIALS AND PROCESS FOR MANUFACTURING SUCH MATERIALS**
PHOTOAKTIVIERBARE BIOZIDE UND/ODER BAKTERIZIDE MATERIALIEN UND VERFAHREN ZUR HERSTELLUNG DERARTIGER MATERIALIEN
BIOCIDE PHOTOACTIVABLE ET/OU MATÉRIAUX BACTÉRICIDES ET PROCÉDÉ DE FABRICATION DE CES MATÉRIAUX

(43) Date of publication of application: 18.04.2018
(73) Proprietor: Commissariat à l'Énergie Atomique et aux Énergies Alternatives, 75015 Paris (FR)
(72) Inventor: BERTHELOT, Thomas, 91940 Les Ulis (FR); SOL, Vincent, 87000 Limoges (FR)
(74) Representative: Icosa

(56) References cited:
- WO-A1-93/00815
- WO-A1-2007/000472
- US-A1- 2007 238 660
- DARYA DZHONS ET AL: "Photochemical modification of polymer surface with bifunctional dyes phenothiazine series", PROCEEDINGS OF THE 17TH INTERNATIONAL ELECTRONIC CONFERENCE ON SYNTHETIC ORGANIC CHEMISTRY, 1 November 2013 (2013-11-01), page d004, XP055334675, Basel, Switzerland DOI: 10.3390/ecsoc-17-d004
- A. V. BUDRUEV ET AL: "Photochemical modification of polyethylene surface with aryl azides", HIGH ENERGY CHEMISTRY, vol. 47, no. 5, 1 September 2013 (2013-09-01), pages 237-241, XP055334912, RU ISSN: 0018-1439, DOI: 10.1134/S0018143913050020
- M. A. RYAN ET AL: "Light-initiated surface modification of oxide semiconductors with organic dyes", LANGMUIR, vol. 4, no. 4, 1 July 1988 (1988-07-01), pages 861-867, XP055334778, US ISSN: 0743-7463, DOI: 10.1021/la00082a014
- ELKE FEESE ET AL: "Photobactericidal Porphyrin-Cellulose Nanocrystals: Synthesis, Characterization, and Antimicrobial Properties", BIOMACROMOLECULES, vol. 12, no. 10, 10 October 2011 (2011-10-10), pages 3528-3539, XP55150400, ISSN: 1525-7797, DOI: 10.1021/bm200718s
- NZAMBE TA KEKI JEAN KERIM ET AL: "Synthesis and photobactericidal properties of a neutral porphyrin grafted onto lignocellulosic fibers", MATERIALS SCIENCE AND ENGINEERING C, vol. 62, 12 January 2016 (2016-01-12), pages 61-67, XP029452918, ISSN: 0928-4931, DOI: 10.1016/J.MSEC.2016.01.028
- El-Zeiny M Ebeid ET AL: "Photostability and Emission Characteristics of In(III)octaethylporphyrin- and In(III)tetraphenylporphyrin-chloride", Inorganica Chimica Acta, vol. 86, 1 January 1984 (1984-01-01), pages 71-74, XP055534377,
- NAQVI A ET AL: "Photochemical immobilization of proteins on microwave-synthesized photoreactive polymers", ANALYTICAL BIOCHEMISTRY, ELSEVIER, AMSTERDAM, NL, vol. 327, no. 1, 1 April 2004 (2004-04-01) , pages 68-73, XP004495869, ISSN: 0003-2697, DOI: 10.1016/J.AB.2003.11.026
- .: "4. Aryl Azide Photolysis" In: "Gels Handbook Vol. 1", 1 January 2016 (2016-01-01), World Scientific Publishing, Singapore, XP055534549, ISBN: 978-981-4656-13-9 pages 211-212,
- NAQVI A ET AL: "Introduction of Functional Groups onto Polypropylene and Polyethylene Surfaces for Immobilization of Enzymes", ANALYTICAL BIOCHEMISTRY, ELSEVIER, AMSTERDAM, NL, vol. 306, no. 1, 1 July 2002 (2002-07-01), pages 74-78, XP027226919, ISSN: 0003-2697 [retrieved on 2002-07-01]
- LI G ET AL: "A facile strategy for the fabrication of highly stable superhydrophobic cotton fabric using amphiphilic fluorinated triblock azide copolymers", POLYMER, ELSEVIER SCIENCE PUBLISHERS B.V, GB, vol. 51, no. 9, 20 April 2010 (2010-04-20) , pages 1940-1946, XP027006772, ISSN: 0032-3861 [retrieved on 2010-04-14]

## Description

### FIELD OF INVENTION

The present invention relates to the field of materials; preferably to surfaces having biocide and/or bactericidal properties. Especially the present invention relates to a photoactivable surface and/or material able to deliver singular oxygen as bactericidal agent; and the process for preparing such materials.

### BACKGROUND OF INVENTION

Biocide and/or bactericidal materials represents a huge public health issue impacting widespread fields such as medical field, environment and food industry. Consequently, it is of interest to develop efficient processes for providing such materials.

In this purpose, one of the most efficient approach is chemically grafting biocide and/or bactericidal agents at the surface of materials. This chemical way allows avoiding releasing biocide and/or bactericidal agents over time.

Since 1960's, the bactericidal properties of quaternary ammonium are known. These compounds feature low toxicity and do not induce skin inflammatory reactions. *Abel et al.* reported that paper supports may be modified by DABCO (1,4-diazibicyclo[2.2.2]octane) and that he grafting of quaternary ammoniums on this support allowed to provide bactericidal materials.

Natural and synthetic polymers were also used as biocide and/or bactericidal agents. For instance, the free amino functions of chitosan may be protonated in a slightly acid medium and the resulting cationic chitosan can act as a quaternary ammonium salt (Rabea et al., Biomacromolecules, 2003, 4, 1457-1465).

Some polymerization techniques such as ATRP (Atom Transfer Radical Polymerization) or RAFT (Reversible Addition-Fragmentation chain Transfer polymerization) were also used for grafting biocide and/or bactericidal agents comprising quaternary ammoniums (Lee et al., Biomacromolecules, 2004, 5; 877-882; Roy et al., Biomacromolecules, 2008, 9; 91-99). However, the art shows that the bactericidal properties depend on the alkyl chain length of the grafted quaternary ammonium.

Another way of interest is the preparation of renewable surfaces from N-halamine compounds. These compounds have the advantage to feature both a large disinfection range and a bactericidal ability due to the oxidative property of the halamine bond (N-Cl). In this chemical process, the halogen atom of the halamine bond is transferred to the receptors of the targeted bacteria, causing their death. After killing microorganisms, the halamine bond may be renewed by a treatment by chloration (Kaminski et al., J. Pham. Sci., 1976, 65, 553).

The research community also focused its attention on photosensitizers. This class of bactericidal compounds has the particularity to produce reactive species (free radicals and/or singular oxygen) very toxic for living cells under irradiations in the visible spectrum. Indeed, at the beginning of 1980's, Nitzan *et al.* and Jori et al. evidenced the concept of Photo-Antimicrobial Chemo Therapy (PACT) by showing that low amounts of porphyrin and light allows killing 99% of a bacteria culture after only 2h.

Then, photobactericidal surfaces were developed by the incorporation of a photosensitizer in a solid surface. For instance, Bezman et al. (Photochem. Photobiol. 1978, 28, 325-329) showed that *E. Coli* bacteria could be killed when contacted with polystyrene beads coated with a photosensitizer after light irradiation. In FEESE et al. (Biomacromolecules, Vol. 12, No. 10, October 2011, pp 3528-3539) and in NZAMBE TA KEKI et al. (Materials and Engineering C, Vol. 62, January 2016, pp 61-67), a porphyrin has been attached on a cellulosic surface by a "Click-chemistry" reaction. Other kind of reactions have also been carried out to directly absorb a porphyrin unit on a support (WO 93/00815) or to graft the porphyrin unit on a modified support (US 2007/238660).

However, the main drawback of these processes for providing biocide and/or bactericidal materials is that these processes always require the functionalization of the support prior to the graft of the biocide and/or of the bactericidal agent.

Furthermore, the processes of the art often need severe conditions (high temperature, use of carcinogenic, mutagenic or toxic to reproduction reagents, etc...) that are not compatible with industrialization.

Thus, there is still a need for providing versatile and easier process of manufacturing biocide and/or bactericidal materials.

Surprisingly, the Applicant has evidenced an efficient process for manufacturing biocide and/or bactericidal materials comprising:
(i) preparing a solution of at least one arylazide functionalized-photosensitizer which is a porphyrin;
(ii) contacting the solution of step (i) and a unmodified support selected from paper, cotton fabrics or polyethylene, thereby resulting in depositing the arylazide functionalized-photosensitizer on the support; and
(iii) covalently grafting by an insertion reaction, the arylazide functionalized-photosensitizer deposited on the support at step (ii), said insertion reaction being carried out by a thermal activation and/or a UV irradiation activation.

The process of the invention is versatile and allows grafting a photosensitizer on a surface that has not been previously modified. Furthermore, the process of the invention is carried out in only one step, and without catalysts, contrary to the process of the art for which several steps are required.

### SUMMARY

This invention thus relates to a process for manufacturing a biocide and/or bactericidal material comprising:
(i) preparing a solution of at least one arylazide functionalized-photosensitizer which is a porphyrin;
(ii) contacting the solution obtained at step (i) and a unmodified support selected from paper, cotton fabrics or polyethylene, thereby resulting in depositing the arylazide functionalized-photosensitizer on the support; and
(iii) covalently grafting by an insertion reaction, the arylazide functionalized-photosensitizer deposited on the support at step (ii), said insertion reaction being carried out by a thermal activation and/or a UV irradiation activation, wherein the UV irradiation activation of the insertion reaction is carried out at a wavelength ranging from 300 nm to 380 nm.

According to one embodiment, the arylazide functionalized-photosensitizer is selected from the group of unmetalled arylazide functionalized-photosensitizer.

According to one embodiment, the concentration of the azide functionalized-photosensitizer solution ranges from more than 0 to 10 mg/mL; preferably, from 0.01 to 5 mg/mL; more preferably, from 0.1 to 1 mg/mL.

According to one embodiment, the solvent of the arylazide functionalized-photosensitizer solution is selected from polar solvent; preferably, is acetone or water.

According to one embodiment, the thermal activation of the insertion reaction is carried out at a temperature ranging from 100°C to 300°C; more preferably, from 200°C to 250°C.

According to one embodiment, the UV irradiation activation of the insertion reaction is carried out at a wavelength of about 365 nm.

According to one embodiment, the UV irradiation activation of the insertion reaction is carried out during a time period ranging from 1 mn to 24h; preferably, the UV irradiation activation of the insertion reaction is carried out during a time period ranging from 1 min to 10 min.

The present invention also refers to a biocide and/or bactericidal material comprising:
(a) an unmodified support selected from paper, cotton fabrics or polyethylene; and
(b) at least one arylazide-functionalized photosensitizer which is a porphyrin;
said arylazide-functionalized photosensitizer being covalently grafted to the support through an insertion bond.

The present invention also refers to the use of the biocide and/or bactericidal material as defined above, in the preparation of clothes or coatings; preferably, in the preparation of protective clothes or protective coatings.

The present invention also refers to the non-therapeutic use of the biocide and/or bactericidal material as defined above, in the decontamination of water and/or biological fluids and/or biological surfaces.

The present invention also refers to a kit comprising:
- in a first compartment, the unmodified support selected from paper, cotton fabrics or polyethylene; and
- in a second compartment, the solution comprising at least one arylazide-functionalized photosensitizer which is a porphyrin.

According to one embodiment, the solution comprising at least one arylazide-functionalized photosensitizer which is a porphyrin, is protected from light.

### DEFINITIONS

In the present invention, the following terms have the following meanings:
- "**about**": preceding a figure means plus or less 10% of the value of said figure;
- "**derivatives**": refers to any compounds resulting from the modification of a compound; especially, the derivative may differ from one or more atoms or functional groups;
- "**biocide**": refers to any used compound or material for killing, destroying, deterioring, rendering harmless, preventing the action or combating organisms; preferably unicellular organisms including for example, eukaryote cells or prokaryote cells. In one preferred embodiment, the organisms are selected from bacteria, fungi, virus and yeasts;
- "**bactericidal**": refers to any used compound or material intended to kill bacteria;
- "**azide**": refers to the chemical functional group - N=N=N (or -N₃);
- "**arylazide**": refers to the chemical functional group - X-N=N=N (or -X-N₃) wherein X represents an aryl group which is selected from mono- or polycyclic system of 5 to 20, and preferably 6 to 12, carbon atoms having one or more aromatic rings (when there are two rings, it is called a biaryl) among which it is possible to cite the phenyl group, the biphenyl group, the 1-naphthyl group, the 2-naphthyl group, the tetrahydronaphthyl group, the indanyl group and the binaphthyl group. In the present invention, the term aryl also means any aromatic ring including at least one heteroatom chosen from an oxygen, nitrogen or sulfur atom. The aryl group can be substituted by 1 to 3 substituents chosen independently of one another, among a hydroxyl group, a linear or branched alkyl group comprising 1, 2, 3, 4, 5 or 6 carbon atoms, in particular methyl, ethyl, propyl, butyl, an alkoxy group or a halogen atom, in particular bromine, chlorine and iodine;
- "**photosensitizer**": refers to any molecules inducing a chemical change in another molecule in a photochemical process;
- **"unmodified support**": refers to any support that is not modified before the grafting step in order to introduce on the support suitable functions involved in the grafting process. Especially, in the present invention, the unmodified support refers to support used as such;
- "**covalently grafting**": refers to any grafting step that lead to a covalent bond between the molecule to be grafted (the photosensitizer) and the support;
- "**insertion reaction**": refers to a chemical reaction in which a compound fits into a bond of another compound. Especially, in the present invention, the function azide of the arylazide-functionalized photosensitizer fits into C-H bond and/or N-H bond of a support that was not previously modified. In the present invention, the insertion reaction requires the activation of the azide function by a thermal activation or by a UV irradiation activation. Advantageously, the aryl moiety of the function arylazide allows stabilizing the nitrene intermediate synthesized during the insertion reaction between arylazide-functionalized photosensitizer and the support that was not previously modified. This stabilization of the intermediate reaction is not obtained with an aliphatic azide;
- "**insertion bond**": refers to any single bond resulting from an insertion reaction as defined above;
- "**thermal activation**": refers to the action of temperature on an organic function involved in an insertion reaction;
- "**UV irradiation activation**": refers to the action of UV light on an organic function involved in an insertion reaction;
- "**unmetalled**": refers to any compound that does not comprise any chemical element selected from metals of the periodic table of elements;
- "**metalled**": refers to any compound that does comprise at least one chemical element selected from metals of the periodic table of the elements. Especially, the term "metalled" refers to any compound that does comprise at least one chemical element selected from alkali metals, alkaline earth metals, transition metals, lanthanoids, actinoids and poor metals. In the present invention, the term "metalled" preferably refers to any compound that does comprise at least one chemical element selected from zinc (Zn), manganese (Mn), silver (Ag), cobalt (Co), palladium (Pd), nickel (Ni), iron (Fe), copper (Cu) and Ytterbium (Yb); more preferably, zinc (Zn);
- "**polar solvent**": refers to any solvent having a nonzero dipole moment;
- "**wavelength**": refers to a physical value for characterizing monochromatic wave in the light spectra and is defined as the distance between two consecutive maxima of the wave amplitude;
- "**protective**": refers to any cloths or coatings that are able to protect from organisms; preferably from unicellular organisms including for example, eukaryote cells or prokaryote cells. In one preferred embodiment, the organisms are selected from bacteria, fungi, virus and yeasts;
- **"tetrapyrrolic compounds**": refers to any compounds having a structure derived from tetrapyrrole (i.e. molecules containing four pyrrole rings held together by direct covalent bonds or by one carbon bridges);
- "**porphyrin**": refers to any aromatic compounds having a structure derived from tetrapyrroles interconnected at their alpha-carbon atoms via methine bridges;
- "**chlorin**": refers to any heterocyclic aromatic rings comprising three pyrroles and one pyrroline cores linked together by methine bridge;
- "**phthalocyanine**": refers to any aromatic compounds comprising four isoindole rings linked together by imine bridge;
- "**benzoporphyrin**": refers to any aromatic compounds having the chemical structure of a porphyrin with one or more benzene rings fused to its pyrrole rings;
- "**bacteriochlorin**": refers to any aromatic compounds having the chemical structure of bacterial sourced chlorin, i.e. having two pyrrole groups in the main ring;
- "**chlorophyl**" or "**chlorophyll**": refers to any magnesium-containing chlorins;
- "corrole" : refers to a macrocycle with four pyrrolic cycles linked together by three methane bridges between four pyrolles and one direct connection between two pyrroles;
- "**texaphyrin**": refers to any compounds having the same chemical structure of porphyrin but in which the methine bridges are changed by imine bridges;
- "**pheophorbide**": refers to any product resulting from chlorophyll breakdown;
- "**phenalenone** or **1H-phenalen-1-one** or **perinaphthenone**" refers to a chemical compound of formula C₁₃H₈O or its derivatives;
- "**xanthene**": refers to a chemical compound of formula C₁₃H₁₀O or its derivatives;
- "**coumarin**" or **"1-benzopyrane-2-one":** refers to a chemical compound of formula C₉H₆O₂ or its derivatives;
- "**psoralen**" or "**7H-furo[3,2-g]chromen-7-one**": refers to a chemical compound of fluorocoumarin family of formula C₁₁H₆O₃ or its derivatives;
- "anthraquinone" or "**anthracenedione**": refers to a chemical compound of formula C₁₄H₈O₂ or its derivatives;
- "**curcuminoid**": refers to a chemical compound which is derivative from curcuma chemical structure or its derivatves;
- "**phenothiazine**": refers to a chemical compound of formula S(C₆H₄)₂NH or its derivatives;
- "**cyanine**": refers to any chemical compound belonging to polymethine dye family.

### DETAILED DESCRIPTION

As mentioned above, the present invention relates to a process for manufacturing a biocide and/or bactericidal material comprising:
(i) preparing a solution of at least one arylazide functionalized-photosensitizer which is a porphyrin;
(ii) contacting the solution of step (i) and a unmodified support selected from paper, cotton fabrics or polyethylene, thereby resulting in depositing the arylazide functionalized-photosensitizer on the support; and
(iii) covalently grafting by an insertion reaction, the arylazide functionalized-photosensitizer deposited on the support at step (ii), said insertion reaction being carried out by a thermal activation and/or a UV irradiation activation.

In the present invention, the "biocide and/or bactericidal" properties are studied in the conditions of AATCC (American Association of Textile Chemists and Colorists), Test Method 100-2004, that comprises the following steps:
(a) an infection step in which the material to be studied is contamined with organims, preferably with bacteria;
(b) an incubation step;
(c) an extraction step in which organisms, preferably bacteria, are eluted from the materials of step (a); and
(d) an enumeration step in which the number of organisms, preferably bacteria, is determined and the percentage reduction by treated specimen is calculated. In the conditions of AATCC test, the material is defined as having a total bactericidal and/or biocide effect when the percentage reduction of organisms by treated specimen is about 100% of the initial number of organisms of the contamined material.

In the conditions of AATCC test, the material is defined as having a partial bactericidal and/or biocide effect when the percentage reduction of organisms by treated specimen ranges from 50% to less than 100% of the initial number of organisms of the contamined material.

In the conditions of AATCC test, the material is defined as having no bactericidal and/or biocide effect when the percentage reduction of organisms by treated specimen ranges from 0% to less than 50% of the initial number of organisms of the contamined material.

In the present invention, biocide and/or bactericidal activity was measured against bacteria such as, but not limited to, *Escherichia Coli, Bacillus thuringiensis* (vegetative form and/or spore), *Salmonella typhimurium, Yersinia pestis* or *Bacillus anthracis* (vegetative form and/or spore).

According to one embodiment, the arylazide functionalized-photosensitizer is selected from the group of arylazide functionalized-photosensitizer in which the photosensitizer is under the form of free base. In the present invention, the terms "free base" mean any chemical compound being a conjugate base form of an amine.

According to one embodiment, the arylazide functionalized-photosensitizer is selected from the group of unmetalled arylazide functionalized-photosensitizer.

According to one embodiment, the arylazide functionalized-photosensitizer is selected from the group of metallized arylazide functionalized-photosensitizer. In one embodiment, the arylazide functionalized-photosensitizer comprises at least one chemical element selected from alkali metals, alkaline earth metals, transition metals, lanthanoids, actinoids and poor metals.

In one embodiment, the alkali metal is selected from lithium (Li), sodium (Na), potassium (K), rubidium (Rb), caesium (Cs) and Francium (Fr).

In one embodiment, the alkaline earth metal is selected from beryllium (Be), magnesium (Mg), calcium (Ca), strontium (Sr), barium (Ba) and radium (Ra).

In one embodiment, the transition metal is selected from scandium (Sc), titanium (Ti), vanadium (Va), chromium (Cr), manganese (Mn), iron (Fe), cobalt (Co), nickel (Ni), copper (Cu), yttium (Y), zirconium (Zr), niobium (Nb), molybdenum (Mo), technetium (Tc), ruthenium (Ru), rhodium (Rh), palladium (Pd), silver (Ag), hafnium, (Hf), tantalum (Ta), tungsten (W), rhenium (Re), osmium (Os), iridium (Ir), platinum (Pt), gold (Au), rutherfordium (Rf), dubnium (Db), seaborgium (Sg), bhorium (Bh), hassium (Hs), meitnerium (Mt), damstadidium (Ds), roentgerium (Rg).

In one embodiment, the lanthanoid is selected from lanthanium (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), Ytterbium (Yb) and lutetium (Lu).

In one embodiment, the actinoid is selected from actinium (Ac), thorium (Th), protactinium (Pa), uranium (U), neptunium (Np), plutonium (Pu), americium (Am), curium (Cm), berkelium (Bk), californium (Cf), einsteinium (Es), fermium (Fm), mendelevium (Md), nobelium (No) and lawrencium (Lr).

In one embodiment, the poor metal is selected from aluminium (Al), zinc (Zn), gallium (Ga), germanium (Ge), cadmium (Cd), indium (In), tin (Sn), antimony (Sb), mercury (Hg), thallium (Ti), lead (Pb), bismuth (Bi), polonium (Po), inunbium (Uub), ununtrium (Uut), ununpentium (Uup), ununhexium (Uuh) and ununseptium (Uus); preferably, the poor metal is selected from aluminium (Al), zinc (Zn), gallium (Ga), germanium (Ge), cadmium (Cd), indium (In), tin (Sn), antimony (Sb), mercury (Hg), thallium (Ti), lead (Pb), bismuth (Bi), polonium (Po). In one embodiment, the poor metal is zinc (Zn).

According to one preferred embodiment, the metalled arylazide functionalized-photosensitizer comprises a metal which does not prevent the production of singlet oxygen and/or reactive oxygen species (ROS) by the photosensitizer of the invention. In one embodiment, the arylazide functionalized-photosensitizer comprises at least one chemical element selected from zinc (Zn), manganese (Mn), silver (Ag), cobalt (Co), palladium (Pd), nickel (Ni), iron (Fe), copper (Cu) and Ytterbium (Yb); more preferably, the metalled arylazide functionalized-photosensitizer comprises at least one atom of zinc (Zn).

According to one embodiment, the arylazide functionalized-photosensitizer is able to produce singlet oxygen and/or reactive oxygen species (ROS). In one embodiment, the arylazide functionalized-photosensitizer under the form of free base, is able to produce singlet oxygen and/or reactive oxygen species (ROS). In one embodiment, the unmetalled arylazide functionalized-photosensitizer is able to produce singlet oxygen and/or reactive oxygen species (ROS). In one embodiment, the metallized arylazide functionalized-photosensitizer is able to produce singlet oxygen and/or reactive oxygen species (ROS).

Generally disclosed arylazide functionalized photosensitizers are tetrapyrrolic compounds such as porphyrins, chlorins, phthalocyanines, benzoporphyrins, bacteriochlorins, chlorophyll derivatives, corroles, texaphyrins, pheophorbides and bacteriopheophorbides; or non tetrapyrrolic compounds such as phenalenones, xanthenes, coumarins, psoralens, anthraquinones, curcuminoids, phenothiazines and cyanines.

According to the invention, the arylazide functionalized-photosensitizer is selected from arylazide porphyrins. According to one embodiment, the arylazide functionalized-photosensitizer is an arylazide functionalized -10,15,20-triphenyl porphyrin. According to one embodiment, the arylazide functionalized-photosensitizer is an arylazide functionalized 10,15,20-triaryl porphyrin. According to one embodiment, the arylazide functionalized-photosensitizer is an arylazide functionalized-10,15,20-tripyridinium porphyrin. According to one embodiment, the arylazide functionalized-photosensitizer is an arylazide functionalized-10,15,20-tri(alkylpyridinium) porphyrin. According to one embodiment, the arylazide functionalized-photosensitizer is an arylazide functionalized-10,15,20-tri(N-alkylpyridinium) porphyrin. According to one embodiment, the arylazide functionalized-photosensitizer is an arylazide functionalized-10,15,20-triaryl porphyrin halide. According to one embodiment, the arylazide functionalized-photosensitizer is an arylazide functionalized-10,15,20-tripyridinium porphyrin halide. According to one embodiment, the arylazide functionalized-photosensitizer is an arylazide functionalized-10,15,20-tri(alkylpyridinium) porphyrin halide.

According to one embodiment, the arylazide functionalized-photosensitizer is a neutral arylazide porphyrin. According to one embodiment, the arylazide functionalized-photosensitizer is 5-(4-azidophenyl)-10,15,20-triphenyl porphyrin (TPP-N₃). According to one embodiment, the arylazide functionalized-photosensitizer is an electronically charged arylazide porphyrin; preferably, a cationic arylazide porphyrin. According to one embodiment, the arylazide functionalized-photosensitizer is 5-(4-azidophenyl)-10,15,20-tri-(N-methyl-4-pyridinium)porphyrin triiodide.

In the present invention, the expression "electronically charged" refers to any compounds being either cationic (lack of electrons, positive Zeta potential) or anionic (excess of electrons, negative Zeta potential). For instance, the Zeta potential of the surface may be measured by an electrokinetic analyzer for solid surface analysis such as SurPASS™ 3 (Anton Paar).

According to one embodiment, the solution of step (i) comprises a solvent selected from polar solvents. According to one embodiment, the solvent is water; preferably milliQ® water. According to one embodiment, the solvent is selected from organic solvents, preferably from organic polar solvents, more preferably the solvent is a volatile organic polar solvent. In one embodiment, the solvent is acetone.

According to one embodiment, the solution of step (i) comprises water and at least one charged arylazide functionalized-porphyrin. According to one embodiment, the solution of step (i) comprises water and at least one cationic arylazide functionalized-porphyrin.

According to one embodiment, the solution of step (i) comprises a polar organic solvent and at least one neutral arylazide functionalized-porphyrin. According to one embodiment, the solution of step (i) comprises a polar organic solvent and at least one cationic arylazide functionalized-porphyrin.

According to one embodiment, the concentration of the arylazide functionalized-photosensitizer solution in the solvent ranges from more than 0 to 10 mg/mL; preferably, from 0.01 to 5 mg/mL; more preferably, from 0.1 to 1 mg/mL.

According to one embodiment, the step (i) is carried out at a temperature ranging from 10°C to 50°C; preferably, the step (i) is carried out at room temperature.

According to one embodiment, the step (i) is carried out at atmospheric pressure. According to one embodiment, the solution of step (i) is homogeneous, i.e. the arylazide functionalized-photosensitizer is homogeneously dissolved in the solvent.

In the present invention, "unmodified support" means that the support is not modified before the grafting step in order to introduce chemical functions on the support that are involved in the grafting process. Advantageously, the process of the invention allows to use the support as such.

The unmodified support may be a hard or a flexible support.

In one embodiment, the synthetic support is a support made of polyethylene. In one embodiment, the synthetic support is polyethylene Tyvek®.

In one embodiment, the synthetic support is a thermoplastic polymer. In one embodiment, the synthetic support is an elastomer. In one embodiment, the synthetic support is selected a thermosetting polymer.

In one embodiment, the unmodified support comprises synthetic or natural polymer. In one embodiment, the unmodified support comprises cellulosic polymer. In one embodiment, the unmodified support is made of cellulosic polymer.

In one embodiment, the unmodified support is selected from paper, cotton fabrics or synthetic support; preferably, the unmodified support is cotton fabrics.

According to one embodiment, the unmodified support comprises natural fibers or synthetic fibers. According to one embodiment, the fibers are woven.

According to one embodiment, the step (ii) is carried out at a temperature ranging from 10°C to 50°C; preferably, the step (ii) is carried out at room temperature.

According to one embodiment, the step (ii) is carried out at a pressure ranging from 220 hPa to 1 200 hPa; preferably, the step (ii) is carried out at atmospheric pressure (i.e. at a pressure of about 1000 hPa).

According to one embodiment, the solution of step (i) is applying on the unmodified support. In the present invention, the solution of step (i) may be applied on the unmodified support by one of the methods well-known by the skilled artisan such as printing, inkjet printing, screen printing, airbrushing, spraying or soaking. According to one embodiment, the unmodified support is soaked in the solution of step (i). According to one embodiment, the solution of step (i) is sprayed on the unmodified support.

According to one embodiment, the step (ii) further comprises a drying step. According to one embodiment, the step (ii) further comprises a drying step after the step (ii) has been carried out. According to one embodiment, the step (ii) further comprises a step for evaporating the solvent. According to one embodiment, the solvent is totally evaporated. According to one embodiment, the solvent is totally evaporated before the grafting step.

According to one embodiment, the step (ii) is carried out in a dark environment, i.e. in an environment protected from light.

According to one embodiment, the step (iii) is carried out at a temperature ranging from 10°C to 300°C; preferably, from 200°C to 250°C.

According to one embodiment, the step (iii) is carried out at a pressure ranging from 220 hPa to 1 200 hPa; preferably, the step (iii) is carried out at atmospheric pressure (i.e. at a pressure of about 1000 hPa).

In the present invention, the arylazide functionalized-photosensitizer is covalently grafted by an insertion reaction, to the support. By "insertion reaction", it means a chemical reaction that lead to the insertion of the compound to be grafted into a single C-H bond and/or N-H bond of the support. Especially, in the present invention, phenyl azide functions are used for allowing implementing the insertion reaction by stabilizing nitrene intermediates contrary to aliphatic azide compounds. The activation of the phenyl azide functions lead to nitrene intermediates able to be inserted in a R-H closest bond (R may be C, N or O atom) of the support to restore its valence.

Contrary to click chemistry reaction, the insertion reaction does not require neither the pre-functionalization of the reagents by suitable functions, nor the use of catalyst (copper for example) for carrying out the click reaction. Especially, when a click chemistry is carried out from an azide functionalized compound, the other reagent has to carry an alkyne function. In the insertion reaction of the present invention, the unmodified support is not required to carry out an alkyne function.

The process of the invention does not comprise any click chemistry reaction; especially, the process of the invention does not comprise any cycloaddition step such as 1,3-dipolar cycloaddition.

According to one embodiment, the insertion reaction is initiated by a thermal activation or a UV irradiation activation of the arylazide function of the photosensitizer. According to one embodiment, the thermal activation or UV irradiation activation may be carried out by any well-known method of the skilled artisan. Especially, the skilled artisan would be able to adapt the activation time depending on the power of the used apparatus.

For example, the thermal activation may be carried out, but not limited to, the use of an oven, an infrared lamp or a thermal dryer. According to one embodiment, the thermal activation is carried out at a temperature ranging from 100°C to 300°C; more preferably, ranging from 200°C to 250°C. According to one embodiment, the thermal activation is carried out during a time period ranging from 10s to 1h; preferably, from 20s to 30 mn; more preferably, from 30s to 5 mn. According to one embodiment, the thermal activation is carried out during a time period ranging from 1 mn to 10 mn.

According to one embodiment, the UV irradiation activation is carried out at a wavelength which is not selected from absorption wavelengths of the photosensitizer for its activation. According to one embodiment, the UV irradiation activation is carried out at a wavelength which is not selected from absorption wavelengths of porphyrin for its activation. According to one embodiment, the UV irradiation activation is carried out at a wavelength which is not selected from absorption wavelengths of arylazide porphyrin for its activation.

According to one embodiment, the UV irradiation activation is carried out at a wavelength ranging from 300 nm to 380 nm; more preferably, the wavelength is about 365 nm.

According to one embodiment, the UV irradiation activation is carried out during a time period ranging from 1 min to 24h. According to one embodiment, the UV irradiation activation is carried out during a time period ranging from 30 mn to 10h. According to one embodiment, the UV irradiation activation is carried out 24h. According to one embodiment, the UV irradiation activation is carried out 4h. According to one embodiment, the UV irradiation activation is carried out 3h. According to one embodiment, the UV irradiation activation is carried out 2h. According to one embodiment, the UV irradiation activation is carried out 1h. According to one embodiment, the UV irradiation activation is carried out 45 min. According to one embodiment, the UV irradiation activation is carried out 30 min. According to one embodiment, the UV irradiation activation is carried out 20 min. According to one embodiment, the UV irradiation activation is carried out 10 min.

Advantageously, the process of the invention allows implementing the grafting of the photosensitizer by irradiation on the unmodified support without altering the properties of photosensitizer. In one embodiment, the grafted porphyrin keeps good biocide and/or bactericidal properties after being grafted on an unmodified support.

Advantageously, the process of the invention allows providing materials becoming biocide and/or bactericidal materials when placed under the light; preferably, when placed under natural light (i.e. sunlight). Especially, in the present invention, bacteria are killed due to the activation by irradiation of the porphyrins.

The process of the invention as defined above, may further comprise a step for activating biocide and/or bactericidal properties of the photosensibilizer. Especially, the present invention also relates to a process for manufacturing a biocide and/or bactericidal material comprising:
(i) preparing a solution comprising at least one arylazide functionalized-photosensitizer which is a porphyrin;
(ii) contacting the solution of step (i) and a unmodified support selected from paper, cotton fabrics or polyethylene, thereby resulting in depositing the arylazide functionalized-photosensitizer on the support;
(iii) covalently grafting by an insertion reaction, the arylazide functionalized-photosensitizer deposited on the support at step (ii) thereby resulting in a biocide and/or bactericidal material, said insertion reaction being carried out by a thermal activation and/or a UV irradiation activation; and
(iv) carrying out the activation of the biocide and/or bactericidal properties of the material at step (iii).

According to one embodiment, the activation of the biocide and/or bactericidal properties of the material of the invention is carried out by UV irradiation. According to one embodiment, the UV irradiation of the biocide and/or bactericidal material may be carried out by any method well-known by the skilled artisan. Especially, the UV irradiation time for activating the biocide and/or bactericidal properties of the material depends on the nature of organisms and of the power of the used lamp.

According to one embodiment, the biocide and/or bactericidal properties of the material of the invention are activated after an irradiation time ranging from more than 0 min to less than 24h.

According to one embodiment, the biocide and/or bactericidal properties of the material of the invention are activated after an irradiation at a wavelength ranging from 400 nm to 750 nm.

This invention also relates to a biocide and/or bactericidal material comprising:
(a) a unmodified support selected from paper, cotton fabrics or polyethylene; and
(b) at least one arylazide-functionalized photosensitizer which is a porphyrin. said arylazide-functionalized photosensitizer being covalently grafted to the support through an insertion bond.

According to one embodiment, the biocide and/or bactericidal material may be obtained by the process of the invention as described above.

According to the invention the unmodified support is selected from a support made from paper, cotton fabrics or polyethylene that is not modified before the grafting step in order to introduce chemical functions on the support that are involved in the grafting process.

In one embodiment, the synthetic support is a support made of polyethylene. In one embodiment, the synthetic support is polyethylene Tyvek®.

In one embodiment, the synthetic support is a thermoplastic polymer. In one embodiment, the synthetic support is an elastomer. In one embodiment, the synthetic support is selected a thermosetting polymer.

In one embodiment, the unmodified support comprises synthetic or natural polymer. In one embodiment, the unmodified support comprises cellulosic polymer. In one embodiment, the unmodified support is made of cellulosic polymer.

In one embodiment, the unmodified support is selected from paper, cotton fabrics or synthetic support; preferably, the unmodified support is cotton fabrics.

According to one embodiment, the unmodified support comprises natural fibers or synthetic fibers. According to one embodiment, the fibers are woven.

According to one embodiment, the arylazide functionalized-photosensitizer is selected from the group of arylazide functionalized-photosensitizer in which the photosensitizer is under the form of free base.

According to one embodiment, the arylazide functionalized-photosensitizer is selected from the group of unmetalled arylazide functionalized-photosensitizer.

According to one embodiment, the arylazide functionalized-photosensitizer is selected from the group of metallized arylazide functionalized-photosensitizer. In one embodiment, the arylazide functionalized-photosensitizer comprises at least one chemical element selected from alkali metals, alkaline earth metals, transition metals, lanthanoids, actinoids and poor metals.

In one embodiment, the alkali metal is selected from lithium (Li), sodium (Na), potassium (K), rubidium (Rb), caesium (Cs) and Francium (Fr).

In one embodiment, the alkaline earth metal is selected from beryllium (Be), magnesium (Mg), calcium (Ca), strontium (Sr), barium (Ba) and radium (Ra).

In one embodiment, the transition metal is selected from scandium (Sc), titanium (Ti), vanadium (Va), chromium (Cr), manganese (Mn), iron (Fe), cobalt (Co), nickel (Ni), copper (Cu), yttium (Y), zirconium (Zr), niobium (Nb), molybdenum (Mo), technetium (Tc), ruthenium (Ru), rhodium (Rh), palladium (Pd), silver (Ag), hafnium, (Hf), tantalum (Ta), tungsten (W), rhenium (Re), osmium (Os), iridium (Ir), platinum (Pt), gold (Au), rutherfordium (Rf), dubnium (Db), seaborgium (Sg), bhorium (Bh), hassium (Hs), meitnerium (Mt), damstadidium (Ds), roentgerium (Rg).

In one embodiment, the lanthanoid is selected from lanthanium (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), Ytterbium (Yb) and lutetium (Lu).

In one embodiment, the actinoid is selected from actinium (Ac), thorium (Th), protactinium (Pa), uranium (U), neptunium (Np), plutonium (Pu), americium (Am), curium (Cm), berkelium (Bk), californium (Cf), einsteinium (Es), fermium (Fm), mendelevium (Md), nobelium (No) and lawrencium (Lr).

In one embodiment, the poor metal is selected from aluminium (Al), zinc (Zn), gallium (Ga), germanium (Ge), cadmium (Cd), indium (In), tin (Sn), antimony (Sb), mercury (Hg), thallium (Ti), lead (Pb), bismuth (Bi), polonium (Po), inunbium (Uub), ununtrium (Uut), ununpentium (Uup), ununhexium (Uuh) and ununseptium (Uus); preferably, the poor metal is selected from aluminium (Al), zinc (Zn), gallium (Ga), germanium (Ge), cadmium (Cd), indium (In), tin (Sn), antimony (Sb), mercury (Hg), thallium (Ti), lead (Pb), bismuth (Bi), polonium (Po). In one embodiment, the poor metal is zinc (Zn). According to one preferred embodiment, the metalled arylazide functionalized-photosensitizer comprises a metal which does not prevent the production of singlet oxygen and/or reactive oxygen species (ROS) by the photosensitizer of the invention. In one embodiment, the arylazide functionalized-photosensitizer comprises at least one chemical element selected from zinc (Zn), manganese (Mn), silver (Ag), cobalt (Co), palladium (Pd), nickel (Ni), iron (Fe), copper (Cu) and Ytterbium (Yb); more preferably, the metalled arylazide functionalized-photosensitizer comprises at least one atom of zinc (Zn).

According to one embodiment, the arylazide functionalized-photosensitizer is able to produce singlet oxygen and/or reactive oxygen species (ROS). In one embodiment, the arylazide functionalized-photosensitizer under the form of free base, is able to produce singlet oxygen and/or reactive oxygen species (ROS). In one embodiment, the unmetalled arylazide functionalized-photosensitizer is able to produce singlet oxygen and/or reactive oxygen species (ROS). In one embodiment, the metallized arylazide functionalized-photosensitizer is able to produce singlet oxygen and/or reactive oxygen species (ROS).

According to the invention, the arylazide functionalized-photosensitizer is selected from arylazide porphyrins. According to one embodiment, the arylazide functionalized-photosensitizer is an arylazide functionalized 10,15,20-triphenyl porphyrin. According to one embodiment, the arylazide functionalized-photosensitizer is an arylazide functionalized 10,15,20-triaryl porphyrin. According to one embodiment, the arylazide functionalized-photosensitizer is an arylazide functionalized-10,15,20-tripyridinium porphyrin. According to one embodiment, the arylazide functionalized-photosensitizer is an arylazide functionalized-10,15,20-tri(alkylpyridinium) porphyrin. According to one embodiment, the arylazide functionalized-photosensitizer is an arylazide functionalized-10,15,20-tri(N-alkylpyridinium) porphyrin. According to one embodiment, the arylazide functionalized-photosensitizer is an arylazide functionalized-10,15,20-triaryl porphyrin halide. According to one embodiment, the arylazide functionalized-photosensitizer is an arylazide functionalized-10,15,20-tripyridinium porphyrin halide. According to one embodiment, the arylazide functionalized-photosensitizer is an arylazide functionalized-10,15,20-tri(alkylpyridinium) porphyrin halide.

According to one embodiment, the arylazide functionalized-photosensitizer is a neutral arylazide porphyrin. According to one embodiment, the arylazide functionalized-photosensitizer is 5-(4-azidophenyl)-10,15,20-triphenyl porphyrin (TPP-N₃). According to one embodiment, the arylazide functionalized-photosensitizer is an electronically charged arylazide porphyrin; preferably, a cationic arylazide porphyrin. According to one embodiment, the arylazide functionalized-photosensitizer is 5-(4-azidophenyl)-10,15,20-tri-(N-methyl-4-pyridinium)porphyrin triiodide.

In the present invention, the amount of the arylazide functionalized-photosensitizer grafted on the unmodified support is determined by UV-visible titration. According to one embodiment, the arylazide functionalized-photosensitizer is grafted on the unmodified support as defined above in a range from more than 0 to 1 µmol/ mg of said support; preferably from 0.001 to 0.04 µmol/mg. According to one embodiment, the amount of the arylazide functionalized-photosensitizer grafted on the unmodified support, is about 0.008 µmol/mg of support. According to one embodiment, the amount of the arylazide functionalized-photosensitizer grafted on the unmodified support, is about 0.025 µmol/mg of support.

This invention also relates to the non-therapeutic use of the biocide and/or bactericidal material as defined above.

According to one embodiment, the material of the invention is useful in the preparation of clothes or coatings; preferably, in the preparation of protective clothes or protective coatings.

According to one embodiment, the material of the invention is useful in the non-therapeutic decontamination of water and/or biological fluids. According to one embodiment, the material of the invention is useful in the non-therapeutic decontamination of biological surfaces.

The present invention also relates to a kit comprising:
- in a first compartment, an unmodified support as defined above; and
- in a second compartment, a solution of at least one arylazide-functionalized photosensitizer as defined above.

According to one embodiment, the kit of the invention allows keeping the solution of at least one arylazide-functionalized photosensitizer, protected from light.

### BRIEF DESCRIPTION OF THE DRAWINGS

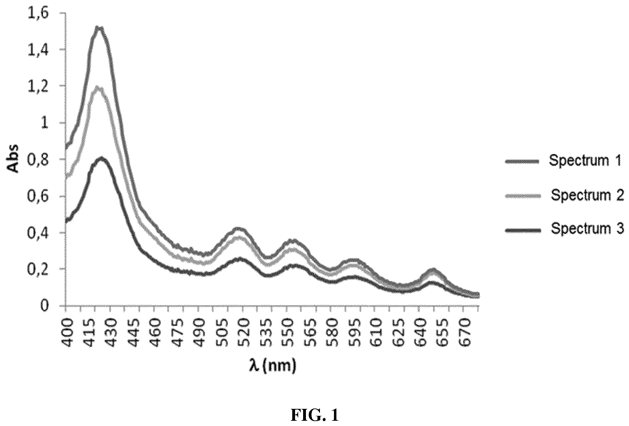

**Figure 1** is spectra showing the presence of Soret bands that corresponds to the high absorbing zone of porphyrin compounds in the blue-violet visible wavelength for arylazide-functionalized porphyrins grafted to cotton fabrics (spectrum 1), piece of polyethylene cloth (spectrum 2) and Whatman paper (spectrum 3).

### EXAMPLES

The present invention is further illustrated by the following examples.

### Abbreviations

CHCl₃: chloroform (or trichloromethane);
DMF: dimethylformamide;
ε: molar extinction coefficient;
Equiv.: equivalent;
h: hour(s);
L: liter;
M: mol/L;
min: minute;
mg: milligram(s);
mL: milliliter(s);
mmol: millimol(s);
NaOH: sodium hydroxide;
PBS: Phosphate Buffered Saline;
R_{f}: frontal rapport migration.

### Materials and Methods

All solvents and reagents were purchased from chemical companies Pyrrole was distilled over CaH₂ under reduced pressure immediately before use. Analytical thin layer chromatography (TLC) was performed on silica gel Merck 60 F₂₅₄. Merck precoated plates (silica gel 60, 2 mm) were used for preparative thin layer chromatography. Column chromatography was carried out with silica gel columns (60 ACC; 15 - 20 µm, Merck).

### Nuclear Magnetic Resonance (NMR)

¹H NMR were recorded on Bruker DPX-400 MHz spectrometer at 400.13 MHz. CDCl₃ or DMSO-*d₆* are used as solvent with tetramethylsilane as an internal standard. The chemical shifts are given in ppm and coupling constant in Hz.

### Mass Spectroscopy (MS)

Mass analysis were performed by either using a Matrix-Assisted Laser Desoprtion Ionization MALDI mass spectrometry (MALDI-TOF/TOF, Smart Beam from Bruker).

### Fourier Transform Infrared spectroscopy (FTIR)

A Perkin-Elmer 1000 FTIR spectrometer equipped with a spectrum software was used to perform FTIR analysis. The spectra were obtained by preparing KBr powder pellets containing 5% w/w of the investigated sample.

### UV- Visible spectroscopy (UV-Vis)

UV-Vis spectra were recorded using a Specord 210 (Analytikjena) spectrophotometer using 10-mm quartz cells. Spectra were realized at adequate concentration (10⁻⁵-10⁻⁶ M) with spectro-grade solvents.

### Diffuse reflectance UV-Vis spectroscopy (DRUV)

DRUV spectra of porphyrin-modified samples were obtained with a CARY 5000 Varian spectrometer using a 110 mm PTFE integrating sphere. Reflectance spectra were recorded against Teflon standard reflectance spectrum. Each spectrum was recorded in the range 350-750 nm.

### PART 1 - CHEMISTRY

### Example 1: Synthesis of neutral arylazide porphyrins

### 1.1. Synthesis of 5-(4-nitrophenyl)-10,15,20-triphenyl porphyrin (Compound 1)

In a two necked flask, are introduced 302 mg (2 mmol; 1 equiv.) of nitrobenzaldehyde, 0.613 mL (6 mmol; 3 equiv.) of benzaldehyde and 60 mL of propionic acid. After 1h heating at about 120°C-130°C under reflux, pyrrole (0.555 mL; 8 mmol; 4 equiv.) previously distilled, is dropped into the reactional mixture. The reaction is carried out 1h at about 120°C, under agitation and in the dark. After cooling the mixture at room temperature, the solvent is evaporated in order to provide the crude product. The compound **1** is obtained after a purification step by preparative plates chromatography (CHCl₃/petrol ether: 6/4). The final product is a purple solid and the yield is about 7.2% (96 mg).

### Characterizations

**R_{f}** =0.62 (CHCl₃/petrol ether: 6/4).

**UV-Visible:** CHCl₃, λₘₐₓ in nm, (*ε*, L.cm⁻¹.mol⁻¹ × 10³): 420 (241); 516 (12.2); 552 (7.1); 591 (4.4); 647 (3.1).

**¹H NMR** (CDCl₃) δₚₚₘ = 8.89 (d, J=4,8 Hz, 2H, H β-pyrrolic); 8.86 (s, 4H, H β-pyrrolic); 8.73 (d, J=4,8 Hz, 2H, **H β-pyrrolic);** 8.62 (d, J=8,5 Hz, 2H, **H _{3,5}-aryl**); ); 8.39 (d, J=8,5 Hz, 2H, **H _{2,6}-aryl**); ); 8.21 (d, J=6,8 Hz, 6H, **H _{2,6-phenyl}**); 7.76 (d, J=7,3 Hz, 9H, H _{3,4,5-phenyl}); -2.78 (s, 2H, N**Hᵢₙₜ**).

**MS** (MALDI): m/z=660.07 [M+H]⁺.

### 1.2. Synthesis of 5-(4-aminophenyl)-10,15,20-triphenyl porphyrin (Compound 2)

In a two necked flask, 80 mg (0.121 mmol; 1 equiv.) of compound **1** is solubilized in 20 mL of CHCl₃. A solution of 82 mg (0.363 mmol; 3 equiv.) of tin chloride in 20 mL of HCl solution (37%) is added followed by 20 mL of acetic acid. Then, the reaction is carried out overnight at about 70°C-80°C, under agitation and in the dark. After cooling at room temperature, the mixture is neutralized with 150 mL of NaOH solution (2M). The crude product is purified by an organic phase extraction followed by washings with ultrapure water. The final product, compound 2, is a purple solid obtained with a yield of about 80% (61 mg).

### Characterizations

**R_{f}** =0.50 (CHCl₃).

**UV-Visible**: CHCl₃, λₘₐₓ in nm, (*ε*, L.cm⁻¹.mol⁻¹ × 10³): 420 (369); 517 (14.0); 554 (7.6); 591 (4.4); 648 (4.0).

**¹H NMR** (CDCl₃) δₚₚₘ = 8.94 (d, J=4,7 Hz, 2H, **H_{β-pyrrolic}**); 8.84 (d, J=4.7 Hz, 2H, H β-pyrrolic); 8.82 (4H, **H_{β-pyrrolic}**); 8.21 (d, J=7,6 Hz, 6H, **H_{2,6-phenyl}**); 7.74 (d, J=7,4 Hz, 9H, H _{3,4,5-phenyl}); 7.99 (d, J=8,2 Hz, 2H, **H_{2,6-aryl}**); 7.04 (d, J=8,2 Hz, 2H, **H _{3,5-aryl}**); 3.99 (s, 2H, N**H₂**);-2.75 (s, 2H, N**Hᵢₙₜ**.).

**MS** (MALDI): m/z=630.11 [M+H]⁺.

### 1.3. Synthesis of 5-(4-azidophenyl)-10,15,20-triphenyl porphyrin TPP-N₃ (Compound 3)

A solution of 8 mg sodium nitrite (0.141 mmol; 1 equiv. dissolved in 4.5 mL of water), is added to a solution of compound 2 (89 mg; 0.141 mmol; 1 equiv. dissolved in 3 mL of HCl 20%) at a temperature of about 0°C. The mixture is stirred 30 mn in the dark. Then, is added an aqueous solution of sodium nitrite (20 mg; 0.283 mmol; dissolved in 4.5 mL of water). The reactional mixture is stirred 1h at room temperature in the dark. After that, the mixture is neutralized at 0°C with NaOH solution (10%) until achieving a pH of about 8. The crude product is purified by an extraction of the aqueous phase with CH₂Cl₂ followed by preparative plates chromatography on silica gel (CHCl₃/Petroleum ether; 7/3 (v/v)). The final product, compound **3**, is a purple solid obtained with a yield of about 91%.

### Characterizations

**R_{f}** =0.65 (CHCl₃/Petroleum ether; 7/3 (v/v)).

**UV-Visible**: CHCl₃, λₘₐₓ in nm: 420; 517; 553; 592; 648.

**FTIR** (KBr, cm⁻¹): υ (N=N) 2121.80 and 2086.39 cm⁻¹.

**¹H NMR** (400.13 MHz; CDCl₃) δₚₚₘ = 8.94 (m, 2H, **H_{β-pyrrolic}**); 8.84 (m, 6H, **H_{β-pyrrolic}**); 8.21 (m, 8H, **H_{3,5-phenyl}, H_{2,6-aryl}**); 7.76 (m, 9H, **H_{2,4,6-phenyl}**); 7.42 (d, J=8,2 Hz, 2H, H _{3,5-aryl});-2.78 (s, 2H, N**Hᵢₙₜ**.).

**¹³C NMR** (100 MHz; CDCl₃) δₚₚₘ = 116.6; 117.4; 120.26; 120.33; 120.68; 121.1; 126.70; 131.3; 134.5; 135.13; 135.7; 138.96; 139.86; 141.91; 142.11; 149.2; 147.

**MS** (MALDI) C₄₄H₂₉N₇: m/z (theo.) =655.75 found 655.97 [M+H]⁺.

### Example 2: Synthesis of charged arylazide porphyrins

### 2.1. Synthesis of 5-(4-acetamidophenyl)-10,1520-tri-(4-pyridyl)porphyrin (Compound 4)

4-acetamidobenzaldehyde (11.6 g; 0.043 mol) and 4-pyridinecarboxybenzaldehyde (7.05 g; 0.108 mol) are carried out at reflux in propionic acid (500 mL). First, pyrrole is dropped in the reactional mixture during 2h. Second, the mixture is further stirred at reflux for 1h30. Then, the mixture is cooled at room temperature overnight. Propionic acid is removed and trimethylamine is added in the mixture. A purification by chromatography through silica column is carried out via Florisil® (Silica gel 60; 0.015-0.040 mm, 50 cm × 45 cm). Eluent: CHCl₃/MeOH; 97:3; CHCl₃/MeOH; 96:4; CHCl₃/MeOH; 95:5. Fractions comprising the final product are collected and concentrated under reduced pressure. A pure fraction, compound **4**, (492.5 mg; 7.30.10-4 mol; 2%) is obtained.

### 2.2. Synthesis of 5-(4-aminophenyl)-10,15,20-tri-(4-pyridyl)porphyrin (Compound 5)

Compound **4** (205.7 mg; 0.310 mmol) is solubilized in 200 mL of a HCl solution (5N). The mixture is heated at 80°C during 3 hours then concentrated under reduced pressure and neutralized with NaOH solution (6M). The crude product is removed by an extraction with CH₂Cl₂. After a drying step with MgSO₄, the final product is removed by a precipitation step in methanol. A pure fraction, compound **5**, (492.9 mg; 7.30.10-⁴ mol; 2%) is obtained.

### 2.3. Synthesis of 5-(4-azidophenyl)-10,15,20-tri-(4-pyridyl)porphyrin (Compound 6)

Compound **5** (32 mg; 0.051 mmol) is solubilized at about 0°C in 0.5 mL of trifluoroacetic acid (TFA). This solution is dropped into a sodium nitrite solution (6.98 mg; 0.101 mmol, in 0.07 mL of water). The mixture is stirred at 0°C for 15 min followed by the dropped addition of azide sodium solution (13.2 mg; 0.202 mmol, dissolved in 0.07 mL of water). The mixture is stirred 1h at 0°C and then diluted with water. A saturated solution of sodium hydrogen carbonate is added to the mixture until that the color of the solution changes from green to purple. The crude product is removed by an extraction with CHCl₃.The organic phase is dried with MgSO₄ and concentrated under reduced pressure. A purification by chromatography through silica column is carried out via Florisil® (Silica gel 60; 0.015-0.040 mm, 50 cm × 45 cm). Eluent: CHCl₃/MeOH; 97:3. Fractions comprising the final product are collected and concentrated under reduced pressure. After a recrystallization, the compound 6 is obtained (31.9 mg; 95%).

### 2.4. Synthesis of 5-(4-azidophenyl)-10,15,20-tri-(N-methyl-4-pyridinium)porphyrin triiodide (Compound 7)

Iodomethane (0.9 mL; 14.46 mmol; 213 equiv.) is added into a solution of compound **6** (45.1 mg; 0.068 mmol; 1 equiv., dissolved in 4.5 mL of anhydrous DMF). The reactional mixture is stirred during 24h at 40°C. The product is then removed by a precipitation step in cold diethyl ether and then, washed many times with cold diethyl ether. The pure product, compound **7**, is obtained with a yield of about 88% (65.2 mg, purple solid).

### Example 3: Insertion reaction

### 3.1. from neutral arylazide porphyrin (compound 3)

The compound **3** was dissolved in acetone (0.1 to 1 mg/ml) until achieving a homogenous solution. Three different supports (paper, cotton fabrics and a piece of polyethylene cloth) were soaked with the solution as defined above. After complete evaporation of the solvent in a dark environment, the grafting reaction is carried out by two ways:
a) a thermal activation at a temperature ranging from 200°C to 250°C during a time ranging from 1 to 10 mn (for paper or cotton); and
b) a UV irradiation activation at a wavelength of about 365 nm (for paper, cotton or polyethylene cloth).

After the grafting step, the materials are rinsed with acetone, sonicated and dried.

### 3.2. from charged arylazide porphyrin (compound 7)

The compound **7** was dissolved in milliQ® water (0.1 to 1 mg/ml) until achieving a homogenous solution. Three different supports (paper, cotton fabrics and polyethylene cloth) were soaked with the solution as defined above.

After complete evaporation of the solvent in a dark environment, the grafting reaction is carried out by two ways:
a) a thermal activation at a temperature ranging from 200°C to 250°C during a time ranging from 1 to 10 mn (for paper or cotton); and
b) a UV irradiation activation at a wavelength of about 365 nm (for paper, cotton or a piece of polyethylene cloth).

After the grafting step, the materials are rinsed with acetone, sonicated and dried.

### 3.3. from a mixture of neutral and charged arylazide porphyrin (compounds 3 and 7)

First, the compound **3** was dissolved in acetone (0.1 to 1 mg/ml) until achieving a homogenous solution. The support (cotton fabrics) was soaked with the solution as defined above. After complete evaporation of the solvent in a dark environment, the grafting reaction is implemented on the cotton fabrics by thermal activation at a temperature ranging from 200°C to 250°Cduring a time ranging from 1 min to 10 min. Then, the support is rinsed with acetone, sonicated and dried.

Second, the compound **7** was dissolved in milliQ® water (0.1 to 1 mg/ml) until achieving a homogenous solution. The support previously modified by the grafting of compound **3**, was soaked with the solution comprising the compound **7**. After complete evaporation of the solvent in a dark environment, the grafting reaction is implemented on the soaked support by thermal activation (200-250°C) during a time period ranging from 1 to 10 min. Then, the final material is rinsed with water, sonicated and dried.

### Example 4: Characterization of the materials of the invention

### 4.1. UV-visible titration

The materials (cotton fabrics modified by the grafting of either the compound **3** or the compound **7**) were dissolved in a hot and concentrated sulfuric acid solution.

Then, a UV-visible titration of the dissolved compounds **3** and **7** was carried out in the resulting solution.

The result for the grafting of compound **3** on the cotton fabrics by the process of the invention is about 0.008 µmol/mg of support. The obtained value for compound **7** is about 0.025 µmol/mg of support.

### 4.2. DRUV technology

The presence and the integrity of the compounds **3** and **7** after grafting on the support were measured by DRUV technology with an integration sphere.

DRUV spectra of porphyrin-modified samples were obtained with a CARY 5000 Varian spectrometer using a 110 mm PTFE integrating sphere. Reflectance spectra were recorded against Teflon standard reflectance spectrum. Each spectrum was recorded in the range 350-750 nm.

Three supports were studied: cotton fabrics, Whatman paper and a piece of polyethylene cloth.

The results are shown in Figure 1.

For each of the supports, the corresponding spectra shows the presence of Soret bands that corresponds to the high absorbing zone of porphyrin compounds in the blue-violet visible wavelength.

Thus, these results evidence that the process of the invention is efficient for grafting arylazide porphyrin (neutral or charged) on a support such as cotton fabrics, Wathman paper or a piece of polyethylene cloth.

### PART 2 - BIOLOGY

### Example 5: Microbiologic tests

The aim of these experiments is to evidence that the materials of the invention have bactericidal properties.

### 5.1. Conditions

The following bacterial strains have been studied:
(a) *Escherichia Coli* BL21 star™ (Gram -);
(b) *Bacillus thuringiensis,* vegetative form and spore (Gram +);
(c) *Salmonella typhimurium* CIP 104474 (Gram -);
(d) *Yersinia pestis* (Gram -);
(e) *Bacillus anthracis* vegetative form and spore (Gram +).

### Preculture

Bacteria were previously isolated in a Luria-Bertani plate with gelatin. Bacteria were collected and incubated overnight at 37°C under stirring in a suitable culture medium (Luria-Bertani or Tryptic Soy Borth).

### Culture

The bacteria culture is used for contacting the materials to study. A dilution (1/200) of the preculture is carried out in a suitable culture medium (Luria-Bertani or Tryptic Soy Borth).

The culture is then incubated at 37°C under stirring during a time period ranging from 2h to 3h until achieving an optic density at 600 nm, ranging from 0.4 to 0.7.

The culture is then diluted again in order to achieve 10⁶ CFU/mL (colony forming unit).

### Infection

The materials of the invention to be studied, under the form of disks, were contaminated with:
(a) 40 µL of the culture at 10⁶ CFU/mL when the support is cotton fabrics or paper; or
(b) 20 µL of the culture at 10⁶ CFU/mL when the support is a piece of polyethylene cloth.

The Petri plates comprising the contaminated disks were incubated an incubator Lexman Light 230 V, E14, 470 Lumen, during 24h at 30°C.

### Controls

For each bacteriological test, the following conditions were studied:
(i) Ungrafted disk (UD) kept in a dark environment (Dark) ;
(ii) Ungrafted disk (UD) exposed to light (Light);
(iii) Grafted disk (GD) kept in a dark environment (Dark) ; and
(iv) Grafted disk (GD) exposed to light (Light);
(v) a positive control (without incubation); and
(vi) a negative control (without bacteria).

### Extraction

Each disk is introduced in an Eppendorf® vial containing 1 mL of PBS buffer. An incubation is carried out during 30 min at room temperature under mild stirring and in a dark environment.

### Enumeration

For each disk, an enumeration of the bacteria colonies was realized.

### 5.2. Results

### 5.2.1. for compound 3-grafted materials

### a) microbiologic results

The microbiologic results for materials grafted with compound 3 after irradiation to LED light at 4000K are presented in Table 1.

**Table 1. Microbiologic results for the materials of the invention.**

| **Support** | **Bacteria** | **Type** | **Effect** |
|---|---|---|---|
| **Cotton fabrics or paper** | *E. coli* | *Gram* - | Total bactericidal effect |
| | *B. thuringiensis* | *Gram* + | (0 CFU/mL after 24 h) |
| | *S. typhimurium* | *Gram* - | |
| **Piece of polyethylene cloth** | *E. coli* | *Gram* - | Total bactericidal effect |
| | *B. thuringiensis* | *Gram* + | (0 CFU/mL after 24 h) |
| **Cotton fabrics** | *Y. pestis* | *Gram* - | Total bactericidal effect |
| | *B. anthracis* | *Gram* + | (0 CFU/mL after 24 h) |

At the beginning of these experiments, the number of bacteria for each infected materials is 10⁶ CFU/mL. After 24h of irradiation to LED light, the materials of the invention have an amount of bacteria equals to 0 CFU/mL. All the tests were performed under the AATCC Test Method 100 1999 "Assessment of Antibacterial finishes on textiles".

Thus, these results evidence that the materials of the invention grafted with neutral aryl azide porphyrin, have bactericidal effect on both bacteria Gram + and bacteria Gram -.

### b) Bactericidal kinetic results

The bactericidal kinetic has been also studied for a support made of cotton fabrics and grafted with compound 3 by irradiation to LED light.

The results (Table 2) show that for each bacterial strain:
(a) a total bactericidal effect is obtained for a LED irradiation period time of about 4h;
(b) a partial bactericidal effect is obtained for a LED irradiation period time ranging from 1h to less than 4h; and
(c) no bactericidal effect is achieved when the LED irradiation period time is about 1h.

**Table 2. Bactericidal kinetics for cotton fabrics grafted with compound 3 during different light irradiation time periods.**

| **Support** | **Bacteria** | **Type** | **Irradiation Time Period** | **Effect** |
|---|---|---|---|---|
| **Cotton fabrics** | *E. coli* | *Gram -* | 4h | Total bactericidal effect |
| | | | 3h | Partial bactericidal effect |
| | | | 2h | Partial bactericidal effect |
| | | | 1h | No bactericidal effect |
| | *B. thuringiensis* | *Gram* + | 4h | Total bactericidal effect |
| | | | 3h | Partial bactericidal effect |
| | | | 2h | Partial bactericidal effect |
| | | | 1h | No bactericidal effect |
| | *S. typhimurium* | *Gram -* | 4h | Total bactericidal effect |
| | | | 2h | No bactericidal effect |

Thus, these results evidence that the materials of the invention allows achieving a bactericidal effect which may be modulated depending on the LED irradiation time period.

### 5.2.2. for compound 7-grafted materials

### a) microbiologic results after LED irradiation

The microbiologic results are presented in Table 3 for cotton fabrics grafted with a cationic aryl azide porphyrin (compound 7) at a concentration equal to 0.2 mg/ml or 1 mg/mL, and after different irradiation time periods to LED light.

**Table 3. Bactericidal effects for cotton fabrics grafted with compound 7 at different concentrations and during different LED irradiation time periods.**

| **Support** | **Concentration (mg/mL)** | **Bacteria** | **Irradiation time period** | **Effect** |
|---|---|---|---|---|
| **Cotton fabrics** | 0.2 | *E. coli* | 24h | Total bactericidal effect |
| | | | 2h | Partial bactericidal effect |
| | | *B. thuringiensis* | 24h | Total bactericidal effect |
| | | | 4h | Total bactericidal effect |
| | | | 3h | Total bactericidal effect |
| | | | 2h | Total bactericidal effect |
| | | | 1h | Total bactericidal effect |
| | | | 30 min | Total bactericidal effect |
| | | | 20 min | Partial bactericidal effect |
| | | | 10 min | Partial bactericidal effect |
| | 1 | *E. coli* | 24h | Total bactericidal effect |
| | | | 2h | Total bactericidal effect |
| | | | 1h | Total bactericidal effect |
| | | | 45 min | Partial bactericidal effect |
| | | | 30 min | No bactericidal effect |
| | | *B. thuringiensis* | 20 min | Total bactericidal effect |
| | | | 10 min | Partial bactericidal effect |

The results show that bactericidal effects are achieved for cotton fabrics grafted with cationic aryl azide porphyrin.

This effect is total against *E*. *Coli* after a LED irradiation of 24h. When the concentration of the porphyrin solution is equal to about 1 mg/mL, a total bactericidal effect against *E. Coli* is achieved faster than when the concentration of the porphyrin solution is equal to about 0.2 mg/mL; especially, the irradiation time period is reduced to 1h.

The bactericidal effect against *B. thuringiensis* is achieved as soon as 30 min after the beginning of the irradiation, when the concentration of the porphyrin solution is 0.2 mg/mL. This irradiation time period is reduced to 20 min when the concentration of the porphyrin solution is 1 mg/mL.

### b) microbiologic results after natural light irradiation

The microbiologic results are presented in Table 4 for cotton fabrics grafted with compound 7 (cationic aryl azide porphyrin) after irradiation to natural light.

**Table 4. Bactericidal effect for cotton fabricss grafted with compound 7 during different natural light irradiation time periods.**

| **Support** | **Bacteria** | **Type** | **Irradiation Time Period** | **Effect** |
|---|---|---|---|---|
| **Cotton fabrics** | *E. coli* | *Gram* - | 2h | Total bactericidal effect (0 CFU/mL after 24 h) |
| | *E. coli* | *Gram* - | 1h | |
| | *B. thuringiensis* | *Gram* + | 5 min | |

The results show that from a cotton fabrics grafted with a charged aryl azide porphyrin (compound 7), a total bactericidal effect may be achieved for an irradiation time period less than 4h. Furthermore, the cotton fabrics grafted with compound 7 is particularly efficient against *B*. *thuringiensis* for which the irradiation time period is reduced to 5 min.

## Claims

1. A process for manufacturing a biocide and/or bactericidal material comprising:
(i) preparing a solution of at least one arylazide functionalized-photosensitizer which is a porphyrin;
(ii) contacting the solution obtained at step (i) and a unmodified support selected from paper, cotton fabrics or polyethylene, thereby resulting in depositing the arylazide functionalized-photosensitizer on the support; and
(iii) covalently grafting by an insertion reaction, the arylazide functionalized-photosensitizer deposited on the support at step (ii), said insertion reaction being carried out by a thermal activation and/or a UV irradiation activation; wherein the UV irradiation activation of the insertion reaction is carried out at a wavelength ranging from 300 nm to 380 nm.

2. The process according to claim **1**, wherein the arylazide functionalized-photosensitizer is selected from the group of unmetalled arylazide functionalized-photosensitizer.

3. The process according to claim **1** or claim **2**, wherein the concentration of the azide functionalized-photosensitizer solution ranges from more than 0 to 10 mg/mL; preferably, from 0.01 to 5 mg/mL; more preferably, from 0.1 to 1 mg/mL.

4. The process according to any one of claims **1** to **3**, wherein the solvent of the arylazide functionalized-photosensitizer solution is selected from polar solvent; preferably, is acetone or water.

5. The process according to any one of claims **1** to **4**, wherein the thermal activation of the insertion reaction is carried out at a temperature ranging from 100°C to 300°C; more preferably, from 200°C to 250°C.

6. The process according to any one of claims **1** to **5**, wherein the UV irradiation activation of the insertion reaction is carried out during a time period ranging from 1 mn to 24h; preferably, the UV irradiation activation of the insertion reaction is carried out during a time period ranging from 1 min to 10 min.

7. A biocide and/or bactericidal material comprising:
(a) an unmodified support that means a surface that has not been previously modified prior to the graft of the arylazide-functionalized photosensitizer, selected from paper, cotton fabrics or polyethylene; and
(b) at least one arylazide-functionalized photosensitizer which is a porphyrin; said arylazide-functionalized photosensitizer being covalently grafted to the support through an insertion bond.

8. Use of the biocide and/or bactericidal material according to claim 7, in the preparation of clothes or coatings; preferably, in the preparation of protective clothes or protective coatings.

9. Non-therapeutic use of the biocide and/or bactericidal material according to claim 7, in the decontamination of water and/or biological fluids and/or biological surfaces.

10. A kit comprising:
- in a first compartment, the unmodified support selected from paper, cotton fabrics or polyethylene; and
- in a second compartment, the solution comprising at least one arylazide-functionalized photosensitizer which is a porphyrin.

11. The kit according to claim **10**, wherein the solution comprising at least one arylazide-functionalized photosensitizer which is a porphyrin, is protected from light.

## Patentansprüche

1. Verfahren zum Herstellen eines bioziden und/oder bakteriziden Materials, Folgendes umfassend:
(i) Erzeugen einer Lösung von wenigstens einem Arylazid-funktionalisierten Photosensibilisator, bei welchem es sich um ein Porphyrin handelt;
(ii) Inkonkaktbringen der in Schritt (i) erhaltenen Lösung und eines unmodifizierten Trägers ausgewählt aus Papier, Baumwollstoff oder Polyethylen, dabei führend zum Deponieren des Arylazid-funktionalisierten Photosensibilisators auf dem Träger; und
(iii) kovalentes Aufpfropfen des in Schritt (ii) auf dem Träger deponierten Arylazid-funktionalisierten Photosensibilisators durch eine Insertionsreaktion, wobei die Insertionsreaktion von einer thermalen Aktivierung und/oder einer UV-Strahlungs-Aktivierung ausgeführt wird;
wobei die UV-Strahlungs-Aktivierung der Insertionsreaktion bei einer von 300 nm bis 380 nm reichenden Wellenlänge ausgeführt wird.

2. Verfahren nach Anspruch **1**, wobei der Arylazid-funktionalisierte Photosensibilisator ausgewählt ist aus der Gruppe von unmetallisiertem Arylazid-funktionalisiertem Photosensibilisator.

3. Verfahren nach Anspruch **1** oder Anspruch **2**, wobei die Konzentration der Azid-funktionalisierten Photosensibilisator-Lösung von mehr als 0 bis 10 mg/mL reicht; bevorzugt von 0,01 bis 5 mg/mL; bevorzugter von 0,1 bis 1 mg/mL.

4. Verfahren nach einem der Ansprüche **1** bis **3**, wobei das Lösungsmittel der Arylazid-funktionalisierten Photosensibilisator-Lösung ausgewählt ist aus polarem Lösungsmittel; wobei es sich bevorzugt um Aceton oder Wasser handelt.

5. Verfahren nach einem der Ansprüche **1** bis **4**, wobei die thermische Aktivierung der Insertionsreaktion ausgeführt wird bei einer Temperatur reichend von 100 °C bis 300 °C; bevorzugter von 200 °C bis 250 °C.

6. Verfahren nach einem der Ansprüche **1** bis **5**, wobei die UV-Strahlungs-Aktivierung der Insertionsreaktion ausgeführt wird während eines Zeitraums reichend von 1 Min. bis 24 Std., wobei die UV-Strahlungs-Aktivierung der Insertionsreaktion bevorzugt während eines von 1 Min. bis 10 Min. reichenden Zeitraums ausgeführt wird.

7. Biozides und/oder bakterizides Material, Folgendes umfassend:
(a) einen unmodifizierten Träger, das heißt, eine Oberfläche, die nicht zuvor vor dem Aufpfropfen des Arylazid-funktionalisierten Photosensibilisators modifiziert wurde, ausgewählt aus Papier, Baumwollstoff oder Polyethylen; und
(b) wenigstens einen Arylazid-funktionalisierten Photosensibilisator, bei welchem es sich um ein Porphyrin handelt;
wobei der Arylazid-funktionalisierte Photosensibilisator durch eine Insertionsbindung kovalent auf den Träger aufgepfropft wird.

8. Verwendung des bioziden und/oder bakteriziden Materials nach Anspruch **7** bei der Erzeugung von Kleidung oder Beschichtungen; bevorzugt bei der Erzeugung von Schutzkleidung und Schutzbeschichtungen.

9. Nicht-therapeutische Verwendung des bioziden und/oder bakteriziden Materials nach Anspruch 7 bei der Dekontaminierung von Wasser und/oder biologischen Fluiden und/oder biologischen Oberflächen.

10. Kit, Folgendes umfassend:
- in einem ersten Bereich den unmodifizierten Träger, ausgewählt aus Papier, Baumwollstoff oder Polyethylen; und
- in einem zweiten Bereich die Lösung, umfassend wenigstens einen Arylazid-funktionalisierten Photosensibilisator, bei welchem es sich um ein Porphyrin handelt.

11. Kit nach Anspruch **10**, wobei die Lösung, umfassend wenigstens einen Arylazid-funktionalisierten Photosensibilisator, bei welchem es sich um ein Porphyrin handelt, lichtgeschützt ist.

## Revendications

1. Un procédé de fabrication d'un matériau biocide et/ou bactéricide comprenant :
(i) La préparation d'une solution d'au moins un photosensibilisateur fonctionnalisé par un arylzide, qui est une porphyrine ;
(ii) La mise en contact de la solution obtenue à l'étape (i) avec un support non modifié choisi parmi le papier, les tissus de coton ou le polyéthylène, conduisant ainsi au dépôt du photosensibilisateur fonctionnalisé par un arylazide sur le support ;
(iii) Le greffage covalent par une réaction d'insertion, du photosensibilisateur fonctionnalisé par un arylazide déposé sur le support de l'étape (ii), ladite réaction d'insertion étant menée par une activation thermique et/ou une activation par irradiation UV ; dans lequel l'activation par irradiation UV de la réaction d'insertion est menée à une longueur d'onde allant de 300 nm à 380 nm.

2. Le procédé selon la revendication **1**, dans lequel le photosensibilisateur fonctionnalisé par un arylazide est choisi parmi le groupe des photosensibilisateurs non métallisés fonctionnalisés par un arylazide.

3. Le procédé selon la revendication **1** ou la revendication **2**, dans lequel la concentration de la solution du photosensibilisateur fonctionnalisé par un arylazide varie de plus de 0 à 10 mg/mL ; de préférence de 0,01 à 5 mg/mL ; plus préférentiellement de 0,1 à 1 mg/mL.

4. Le procédé selon l'une quelconques des revendications **1** à **3**, dans lequel le solvant de la solution du photosensibilisateur fonctionnalisé par un arylazide est choisi parmi les solvants polaires ; de préférence est l'acétone ou l'eau.

5. Le procédé selon l'une quelconques des revendications **1** à **4**, dans lequel l'activation thermique de la réaction d'insertion est mise en œuvre à une température allant de 100°C à 300°C ; de préférence de 200°C à 250°C.

6. Le procédé selon l'une quelconques des revendications **1** à **5**, dans lequel l'activation par irradiation UV de la réaction d'insertion est mise en œuvre pendant une période de temps allant de 1 mn à 24h ; de préférence, l'activation par irradiation UV de la réaction d'insertion est mise en œuvre pendant une période de temps allant de 1 mn à 10 mn.

7. Un matériau biocide et/ou bactéricide comprenant :
(a) Un support non modifié, c'est-à-dire une surface qui n'a pas été précédemment modifié avant le greffage du photosensibilisateur fonctionnalisé par un arylazide, choisi parmi le papier, les tissues de coton ou le polyéthylène ; et
(b) Au moins un photosensibilisateur fonctionnalisé par un arylazide qui est une porphyrine ; ledit photosensibilisateur fonctionnalisé par un arylazide étant covalemment greffé au support via une liaison d'insertion.

8. Utilisation du matériau biocide et/ou bactéricide selon la revendication 7, dans la préparation de vêtements ou de revêtements ; de préférence, dans la préparation de vêtements de protection ou de revêtements protecteurs.

9. Utilisation non-thérapeutique du matériau biocide et/ou bactéricide selon la revendication 7, dans la décontamination de l'eau et/ou de fluides biologiques et/ou de surfaces biologiques.

10. Un kit comprenant :
- Dans un premier compartiment, le support non modifié choisi parmi le papier, les tissus de coton ou le polyéthylène ; et
- Dans un second compartiment, la solution comprenant au moins un photosensibilisateur fonctionnalisé par un arylazide qui est une porphyrine.

11. Le kit selon la revendication **10**, dans lequel la solution comprenant au moins un photosensibilisateur qui est une porphyrine, fonctionnalisé par un arylazide, est protégée de la lumière.
